# EUROPEAN PATENT SPECIFICATION

(11) **EP 2 130 716 B1**
(45) Date of publication and mention of the grant of the patent: **16.02.2011**
(21) Application number: 08711823.8
(22) Date of filing: 22.02.2008
(51) Int. Cl.: B60N 2/30, B60N 2/20, B60N 2/44

(54) **LOCK DEVICE**
VERRIEGELUNGSVORRICHTUNG
DISPOSITIF DE VERROUILLAGE

(30) Priority: 16.03.2007 JP 2007068218
(43) Date of publication of application: 09.12.2009
(73) Proprietor: Toyota Boshoku Kabushiki Kaisha, Kariya-shi, Aichi 448-8651 (JP)
(72) Inventor: OTSUKA, Taiyou, Kariya-shi Aichi 448-8651 (JP); ASANO, Makoto, Kariya-shi Aichi 448-8651 (JP)
(74) Representative: Winter, Brandl, Fürniss, Hübner, Röss, Kaiser, Polte - Partnerschaft
(86) International application number: PCT/JP2008/053049
(87) International publication number: WO 2008/126479

(56) References cited:
- EP-A1- 1 516 771
- EP-A2- 0 709 249
- EP-B1- 0 709 249
- WO-A1-2006/132018
- WO-A1-2006/132018

## Description

### TECHNICAL FIELD

The present invention mainly relates to a locking device that is capable of connecting a vehicle seat to a vehicle body side or disconnecting the same therefrom.

### BACKGROUND ART

An example of a locking device of this type is art taught by JP 2005-271903, WO 2006/132018 A1, or EP 1516771 A1. In this art, a locking mechanism is provided to a seat side and a striker is provided to a vehicle body side. The locking mechanism includes a base plate attached to the seat side, a hook rotatably supported on the base plate, a pawl and a thrust member. The base plate has a recess that is capable of receiving the striker. The hook forms a locked condition in which the striker is held between the hook and the recess of the base plate or an unlocked condition in which the hook is spaced from the striker. The pawl and the thrust member are respectively coaxially rotatably supported. The pawl, when rotated to a position in which the pawl can engage the hook, can maintain the hook in the locked condition. The thrust member is biased by a spring force so as to rotate to a thrusting position in which the thrust member can further press the hook positioned in the locked condition in the locked direction. Thus, a clearance between the locking mechanism and the striker in the locked condition can be eliminated.
Further, the thrust member is provided with a deformation promoting portion that is formed by bending a portion thereof. The deformation promoting portion is formed by swelling one side of the thrust member into a bead-like shape. The deformation promoting portion, when a load applied from the hook side in the locked condition to the thrust member side exceeds a predetermined value, can be deformed before any other portions contained in a transmission route of the load are deformed, so as to avoid the hook, the pawl or other such members from deforming. After the deformation promoting portion is deformed, the hook can be maintained in the locked condition via the pawl.

### DISCLOSURE OF THE INVENTION

### PROBLEM TO BE SOLVED BY THE INVENTION

The deformation promoting portion of the above referenced documents is formed by swelling one side of the thrust member into the bead-like shape. Therefore, a space in a thickness direction of the locking mechanism is occupied by the swollen portion. This may lead to an increased thickness of the locking mechanism. Further, the base plate or other such members that are positioned adjacent to the thrust member must be designed to be prevented from interfering with the deformation promoting portion. This may lead to complicated shapes of the base plate or other such members.

The present invention has been made for solving such problems. Starting out from e.g. EP1516771 A1 it is the object of the present invention to ensure a defined deformation property of the thrust member while avoiding the space in a thickness direction of the locking mechanism from being occupied by the deformation promoting portion of the thrust member and to simplify the shapes of the base plate or other such members that are positioned adjacent to the thrust member.

### MEANS FOR SOLVING THE PROBLEM

This object is solved by a locking device according to claim 1. Preferred embodiments thereof are subject-matter of dependent claims.
A locking device according to the invention includes a locking mechanism provided on one of two members to be engaged with each other, and a striker provided on the other of the two members. The locking mechanism includes a base plate, a hook, a pawl, a locking spring, a thrust member and a thrust spring. The base plate has a recess that is capable of receiving the striker. The hook is rotatably supported on the base plate via a shaft. The hook, when rotated, is capable of forming a locked condition in which the striker is held between the hook and the recess of the base plate or an unlocked condition in which the hook is spaced away from the striker. The pawl is rotatably supported on the base plate via a shaft. The pawl is capable of rotating to a position in which the pawl can engage the hook and maintaining the hook in the locked condition. The locking spring is capable of biasing the hook and the pawl such that the hook and the pawl are stabilized in the locked condition or the unlocked condition. The thrust member is rotatably supported on the base plate via a shaft. The thrust member is capable of rotating to a thrusting position in which the thrust member can press the hook in the locked condition toward a locking direction via a cam surface formed therein. The thrust spring is capable of biasing the thrust member toward the thrusting position.
The thrust member has a through hole that is positioned between a rotation center of the thrust member and the cam surface. The through hole forms a deformation promoting portion that is capable of deforming the thrust member to engage the hook and the pawl each other when a load having a predetermined value or more is exerted on the thrust member side from the hook side in the locked condition.

As just described, the through hole formed in the thrust member forms the deformation promoting portion that is capable of deforming the thrust member when the excessive load is exerted on the thrust member. Therefore, unlike, for example, the deformation promoting portion that is formed by swelling a portion of the thrust member into a bead-like shape, a space in a thickness direction of the locking mechanism can be avoided from being occupied by the deformation promoting portion. As a result, a thickness of the locking mechanism can be reduced. Further, with regard to the base plate or other such members that are positioned adjacent to the thrust member, it is not necessary to take measures to prevent the same from interfering with the deformation promoting portion. As a result, the base plate or other such members can be simplified in shape.

The through hole forming the deformation promoting portion may be positioned closer to the rotation center than the cam surface of the thrust member.

The through hole forming the deformation promoting portion has an arcuate shape that is centered at the rotation center of the thrust member.

Therefore, even if a rotational position (a thrusting position) of the thrust member that can press the hook in the locked condition toward the locking direction is changed, the load for elastically deforming the thrust member at the deformation promoting portion can be maintained constant. Thus, when the excessive load is exerted on the thrust member side from the hook side, a load absorbing property can be uniformed.

Furthermore, the deformation promoting portion includes at least two deformable portions that are positioned between both end portions of the arcuate through hole and both peripheries of the thrust member. The deformable portions may be curved outwardly from the peripheries of the thrust member so as to project therefrom.

According to this structure, when the load having the predetermined value or more is exerted on the thrust member from the hook in the locked condition, the deformable portions of the deformation promoting portion can always be deformed to a certain shape while they are bent outwardly from the peripheries of the thrust member. Thus, the load absorbing property of the deformation promoting portion can be uniformized when the load having the predetermined value or more is applied to the thrust member. Moreover, the deformation promoting portion of the thrust member may be constructed to be deformed within an elastic limit thereof.
According to this structure, when the load exerted on the thrust member side from the hook side in the locked condition is reduced to less than the predetermined value, the deformation promoting portion can be restored to an original shape. Therefore, the locking mechanism can be continuously used in a normal condition.

### BRIEF DESCRIPTION OF THE DRAWINGS

FIG 1 is a side view of a retractable seat for a vehicle.
FIG. 2 is a structural view of a locking mechanism, which illustrates an unlocked condition thereof.
FIG 3 is a structural view of the locking mechanism, which illustrates an unlocked condition thereof.
FIG. 4 is a cross-sectional view taken along line A-A in FIG 3.
FIG 5 is a cross-sectional view taken along line B-B in FIG 3.
FIG 6 is an enlarged plan view of a thrust member according to Embodiment 1.
FIG 7 is a structural view corresponding to FIG 3, which illustrate a condition in which a deformation promoting portion of the thrust member according to Embodiment 1 is deformed.
FIG. 8 is a plan view of a thrust member according to Embodiment 2.
FIG. 9 is a plan view of a thrust member according to Embodiment 3.
FIG. 10 is a plan view of a thrust member according to Embodiment 4.
FIG. 11 is a plan view of a thrust member according to Embodiment 5.
FIG. 12 is a plan view of a thrust member according to Embodiment 6.

### DESCRIPTION OF REFERENCE SYMBOLS

- 10: seat cushion (one of two members)
- 14: floor (the other of two members)
- 20: locking mechanism
- 22: base plate
- 23: recess
- 30: hook
- 46: pawl
- 56: locking spring
- 60: thrust member
- 61: cam surface
- 64: deformation promoting portion
- 65: through hole
- 66: thrust spring
- 70: striker

### BEST MODES FOR CARRYING OUT THE INVENTION

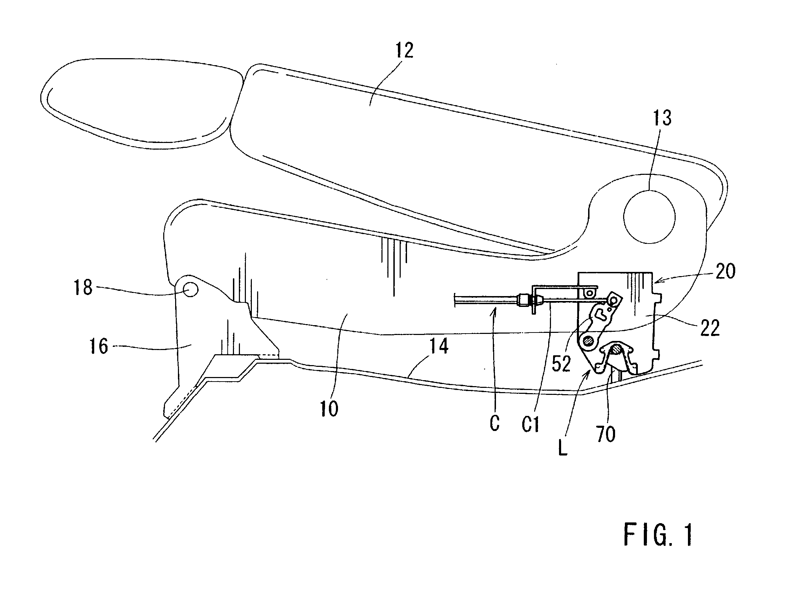

In the following, a preferred embodiment for carrying out the present invention will be described with reference to the drawings.
First, Embodiment 1 of the present invention will be described with reference to FIG. 1 to FIG. 7.
A vehicle retractable seat shown in FIG. 1 is, for example, a rear seat for three. In order to retract a seat of this type, a reclining device 13 is first operated to fold a seat back 12 onto a seat cushion 10 as shown in FIG. 1. At the same time, an unlocking operation is performed in order to unlock a locking device L that connects a rear side lower portion of the seat cushion 10 and a floor 14 side. Thereafter, the seat cushion 10 is rotated using a front side end portion thereof as a fulcrum, so that the entire seat is raised against a back surface of a front seat (not shown).
As a structure for this purpose, the front side end portion of the seat cushion 10 (a cushion frame) is connected to a hinge bracket 16 fixed to the floor 14 via a hinge pin 18. Further, the locking device L is generally constructed of a locking mechanism 20 and a striker 70. The locking mechanism 20 is positioned at the rear side lower portion (one of two members) of the seat cushion 10 (the cushion frame). The striker 70 is fixed to the floor 14 (the other of the two members). Further, a connection structure that is composed of the hinge bracket 16 and the hinge pin 18 and the locking device L are respectively disposed on, for example, both sides of the seat cushion 10.

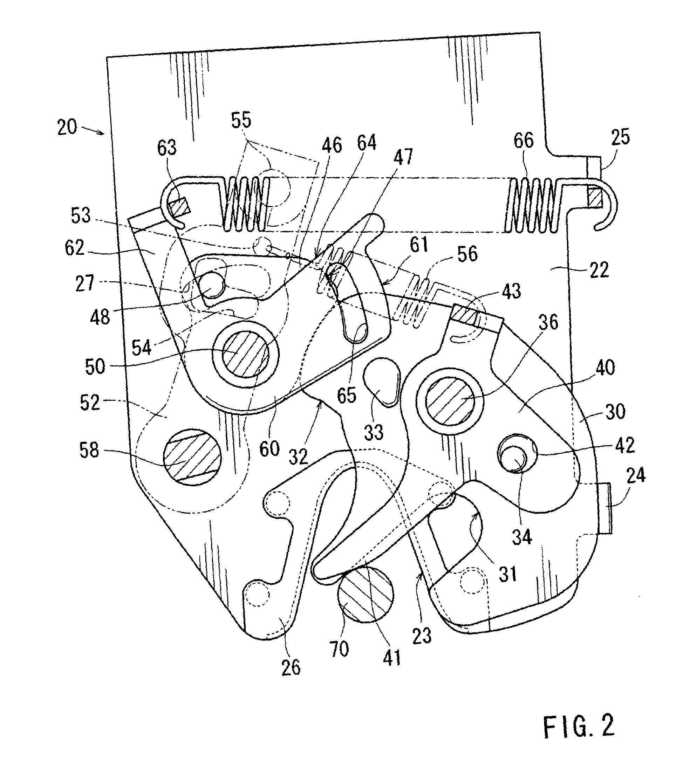

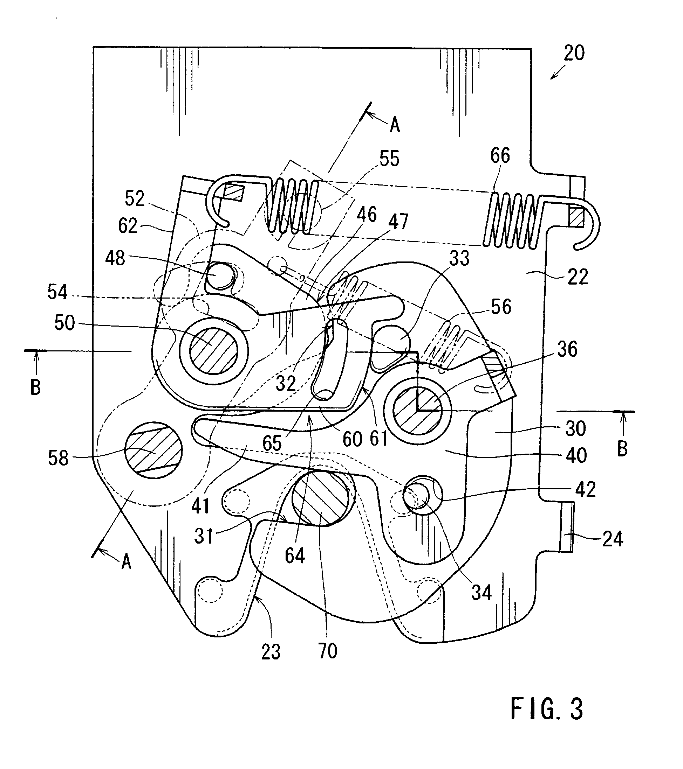

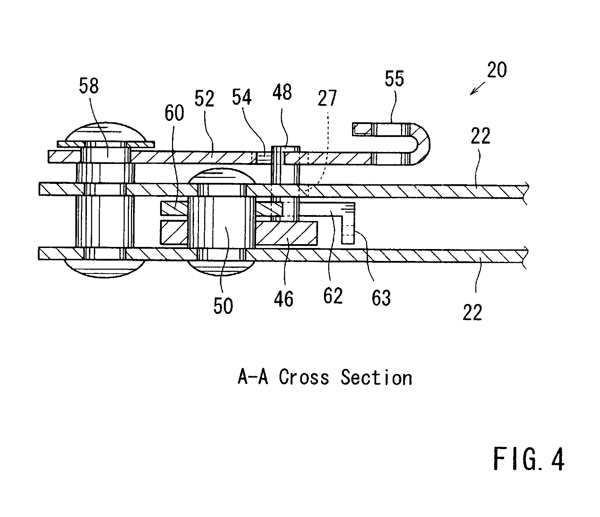

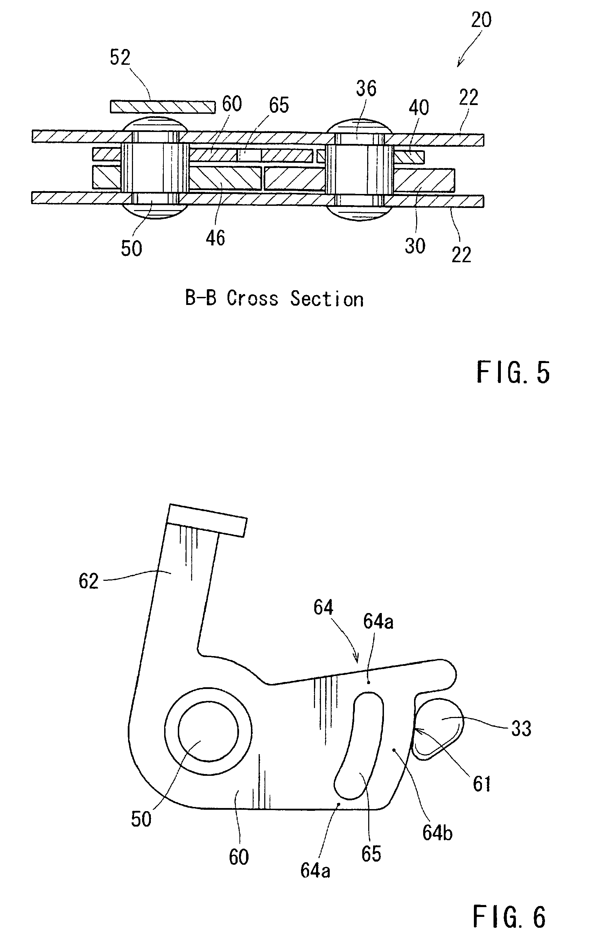

The locking mechanism 20 shown in FIG. 2 to FIG. 5 essentially consists of base plates 22, a hook 30, a canceling plate 40, a pawl 46, a release lever 52 and a thrust member 60.
The base plates 22 are arranged in pairs. The base plates 22 are connected to each other at desired intervals (FIG. 4 and FIG. 5), so that the remaining components except for the release lever 52 are positioned therebetween. However, in FIG. 2 and FIG. 3, the nearer base plate 22 is omitted. The base plates 22 are connected to the seat cushion 10 (the cushion frame) of the seat shown in FIG. 1.
Lower portions of the base plates 22 are provided with recesses 23 that are downwardly opened. The recesses 23 are capable of receiving the striker 70 from an open side thereof. An opening width of the recess is gradually increased downwardly, so as to facilitate receiving of the striker. Peripheries of the recesses 23 are provided with resin coatings 26. The resin coatings 26 are intended to reduce noise generation caused by metal-to-metal contacting of the base plates 22 and the striker 70 at the time of locking, which will be described hereinafter. The base plate 22 has a stopper 24 and a spring engagement portion 25 that are formed therein by partly folding a right side periphery thereof. Conversely, the base plate 22 positioned on an upper side in FIG. 4 and FIG. 5 has an insertion hole 27 into which a cylindrical engagement projection 48 formed in the pawl 46 is introduced.

The hook 30 and the canceling plate 40 are respectively rotatably attached to a support shaft 36 that is fixed to the base plates 22 at both ends thereof. The hook 30 has a hook recess 31 that is opened laterally obliquely. When the hook recess 31 engages the striker 70 that enters the recesses 23 of the base plates 22, the striker 70 is held between the hook recess 31 and the recesses 23, so that a locked condition of the locking mechanism 20 is obtained (FIG. 3). The hook 30 has an engagement surface 32 that is formed in a circumferential surface thereof, and a projection 33 that is laterally projected therefrom. The projection 33 is positioned between the engagement surface 32 and the support shaft 36. Also, the hook 30 has a cylindrical protrusion 34 that is laterally projected therefrom in the same direction as the projection 33. The protrusion 34 is positioned opposite to the projection 33 across the support shaft 36. Further, in order to prevent noise generation caused by metal-to-metal contact between the hook 30 and the striker 70 at the time of locking, a periphery of the hook recess 31 may be provided with a resin coating.
The canceling plate 40 has a contacting portion 41 and a spring engagement portion 43. The contacting portion 41 extends along one of the opposite peripheries of the hook recess 31 of the hook 30. The spring engagement portion 43 is formed in an end portion positioned opposite to the contacting portion 41. Also, the canceling plate 40 has a circular engagement hole 42 in which the projection 34 of the hook 30 is loosely introduced. Thus, a clearance is formed between an outer circumferential surface of the projection 34 and an inner circumferential surface of the engagement hole 42, so as to define a movable range in which the canceling plate 40 can rotate relative to the hook 30. Further, after the projection 34 and the engagement hole 42 eccentrically contact each other, the hook 30 and the canceling plate 40 may integrally rotate.

The pawl 46 and the thrust member 60 are respectively rotatably supported on a support shaft 50 that is fixed to the base plates 22 at both ends thereof. The pawl 46 has an engagement end surface 47 and an engagement protrusion 48. The engagement end surface 47 can contact and push the engagement surface 32 of the hook 30. The engagement protrusion 48 passes through the insertion hole 27 of the base plate 22 positioned on the upper side in FIG. 4 and FIG. 5 and projects outward from the base plate 22. The engagement protrusion 48 is capable of contacting an arm portion 62 of the thrust member 60 between the base plates 22. The insertion hole 27 of the base plate 22 has an arcuate shape that is centered at an axis of the support shaft 50, so as to allow the engagement projection 48 to move when the pawl 46 is rotated (FIG. 2 and FIG. 3).
The thrust member 60 has a cam surface 61 that is capable of contacting the projection 33 of the hook 30. The cam surface 61 is formed in a distal end portion of the thrust member 60. Further, the thrust member 60 has an arm portion 62 and a spring engagement portion 63. The arm portion 62 is capable of contacting the engagement protrusion 48 of the pawl 46. The spring engagement portion 63 is formed in an end portion of the arm portion 62. A thrust spring 66 constructed of a tension coil spring is positioned between the spring engagement portion 63 and the spring engagement portion 25 of the base plate 22. The thrust member 60 is biased clockwise in, for example, FIG. 2 about the axis of the support shaft 50 by a spring force of the thrust spring 66.

As will be apparent from FIG. 6 that enlarges and shows the thrust member 60, the thrust member 60 has a through hole 65 that forms a deformation promoting portion 64. The through hole 65 is positioned between the axis of the support shaft 50 and the cam surface 61. The through hole 65 is positioned closer to the cam surface 61 than a rotation center of the thrust member 60. Further, the through hole 65 has an arcuate shape that is centered at the axis of the support shaft 50 in planar shape.
The deformation promoting portion 64 includes two deformable portions 64a and a deformable portion 64b. The deformable portions 64a are positioned between both end portions of the through hole 65 and both peripheries of the thrust member 60. The deformable portion 64b is positioned between the through hole 65 and the cam surface 61. When the thrust member 60 is applied with a large load from the hook 30 side, some or all of the deformable portions 64a and 64b of the deformation promoting portion 64 can be elastically deformed before any other portions are deformed.

The release lever 52 is positioned outside the base plate 22 positioned on the upper side in FIG. 4 and FIG. 5. A proximal end portion of the release lever 52 is rotatably supported on one end portion of a support shaft 58 that is attached to the base plates 22. A distal end portion of the release lever 52 terminates in a cable connecting portion 55 that is folded in a U-shape. The cable connecting portion 55 is connected to one end of an inner cable C1 of a manipulation cable C that is capable of transmitting a manipulation force (a pulling force) for unlocking to the locking mechanism 20 (FIG. 1). Therefore, when the inner cable C1 of the manipulation cable C is pulled by performing an unlocking operation, the release lever 52 rotates counterclockwise from a condition shown in, for example, FIG. 3 about an axis of the support shaft 58. Further, the support shaft 58 is positioned beyond the support shaft 50 of the pawl 46 and the thrust member 60 as viewed from the cable connecting portion 55 of the release lever 52.
An engagement hole 54 having an L-shape in planar shape is formed in the release lever 52 at an intermediate position between both end portions thereof. The engagement protrusion 48 of the pawl 46 passes through the insertion hole 27 of the base plate 22 and is introduced into the engagement hole 54. Also, a spring engagement hole 53 is formed in the release lever 52 at a position adjacent to the engagement hole 54. A locking spring 56 constructed of a tension coil spring is positioned between the spring engagement hole 53 and the spring engagement portion 43 of the canceling plate 40. The canceling plate 40 is biased counterclockwise in, for example FIG. 2 about an axis of the support shaft 36 by a spring force of the locking spring 56, and at the same time, the release lever 52 is biased clockwise in FIG. 2 about the axis of the support shaft 58 by the spring force.

Next, a function of the locking device L will be described.
First, the locking mechanism 20 is in an unlocked condition shown in FIG. 2. As previously described, because the canceling plate 40 is biased counterclockwise in FIG. 2 due to the spring force of the locking spring 56, the engagement hole 42 of the canceling plate 40 and the projection 34 of the hook 30 eccentrically contact each other. Therefore, the hook 30 is also biased counterclockwise via the canceling plate 40. At this time, the circumferential surface of the hook 30 contacts the stopper 24 of the base plate 22, so that a biasing force applied to the hook 30 can be absorbed.
Conversely, the release lever 52 is biased clockwise in FIG. 2 due to the spring force of the locking spring 56. The engagement hole 54 formed therein and the engagement protrusion 48 of the pawl 46 engage each other. Thus, the pawl 46 is also biased clockwise via the release lever 52. At this time, a distal end of the pawl 46 contacts the circumferential surface of the hook 30, so that a biasing force applied to the pawl 46 can be absorbed.
Also, as previously described, the thrust member 60 is biased clockwise in FIG. 2 due to the spring force of the thrust spring 66. At this time, one end portion of the thrust member 60 contacts the projection 33 of the hook 30, so that a biasing force applied to the thrust member 60 can be absorbed.

As shown in FIG. 1, in the unlocked condition of the locking mechanism 20, when the seat cushion 10 is moved to be set in the floor 14 side, the striker 70 positioned on the floor 14 side relatively enters the recesses 23 formed in the base plates 22 of the locking mechanism 20. Because of the entering of the striker 70, the hook recess 31 of the hook 30 engages the striker 70 and at the same time, the contacting portion 41 of the canceling plate 40 contacts the striker 70. As a result, a force can be applied to the hook 30 and the canceling plate 40 to rotate the same about the axis of the support shaft 36. Thus, the hook 30 and the canceling plate 40 are rotated clockwise in FIG. 2 against the spring force of the locking spring 56, so that the locked condition shown in FIG. 3 is obtained.
As previously described, the pawl 46 is applied with a biasing force of the locking spring 56 via the release lever 52. The biasing force applied to the pawl 46 can be absorbed by the hook 30. Therefore, as the hook 30 rotates, the pawl 46 rotates clockwise in FIG. 2 about the axis of the support shaft 50. As a result, the engagement end surface 47 thereof can be positioned opposite to the engagement surface 32 of the hook 30 so as to be capable of contacting the same (FIG. 3). Further, upon rotation of the pawl 46, the release lever 52 rotates clockwise in FIG. 2 about the axis of the support shaft 58 due to the spring force of the locking spring 56.

As described above, the thrust member 60 is applied with a biasing force of the thrust spring 66. The biasing force applied to the thrust member 60 can be absorbed by the projection 33 of the hook 30. Therefore, as the hook 30 rotates, the thrust member 60 rotates to a thrusting position in which the cam surface 61 is pressed to an outer circumferential surface of the projection 33 of the hook 30 (FIG. 3). A pressure angle is defined in the cam surface 61 of the thrust member 60, so as to provide a force that is capable of further rotating the hook 30 clockwise in FIG. 3 due to the biasing force of the thrust spring 66. As a result, the striker 70 can be thrust into the recesses 23 of the base plates 22. Therefore; the striker 70 is firmly held between the recesses 23 of the base plates 22 and the hook recess 31 of the hook 30, so that a clearance produced between the locking mechanism 20 and the striker 70 can be eliminated.

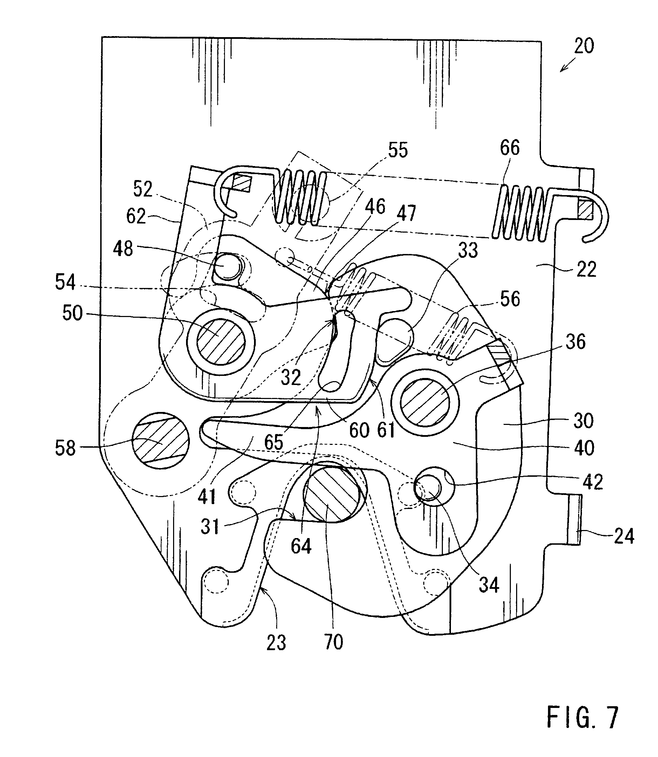

In the locked condition shown in FIG. 3, when a load is generated in a direction in which the striker 70 is disengaged from the recesses 23 of the base plate 22, the load can be applied to the thrust member 60 via the hook 30 and the projection 33. When the load exceeds a predetermined value, some or all of the deformable portions 64a and 64b of the deformation promoting portion 64 of the thrust member 60 can be elastically deformed by the load, thereby absorbing the load. At this time, the deformable portions 64a positioned at both end portion sides of the through hole 65 can respectively be bent while they are protruded outwardly. Conversely, the deformable portion 64b can be bent so as to depress the through hole 65.
Upon elastic deformation of the deformation promoting portion 64, as shown in FIG. 7, the engagement end surface 47 of the pawl 46 contacts the engagement surface 32 of the hook 30, so that they are maintained in an engagement condition. As a result, a clearance elimination function for eliminating the clearance between the locking mechanism 20 and the striker 70 is canceled. However, the locking mechanism 20 is still maintained in the locked condition. In this way, when a load having a predetermined value or more is exerted between the locking mechanism 20 and the striker 70 in the locked condition, the deformation promoting portion 64 of the thrust member 60 can be deformed before any other portions contained in a transmission route of the load are deformed. As a result, main portions of the locking mechanism 20 can be prevented from deforming, so that the original locking function can be maintained. Further, when the load applied to the thrust member 60 is reduced to less than the predetermined value, the deformation promoting portion 64 can be restored to an original shape, so that the locking mechanism 20 can be returned from the condition shown in FIG. 7 to the condition shown in FIG. 3.

Function of the canceling plate 40 will be described. When the hook 30 is in a locked position shown in FIG. 3, the canceling plate 40 is biased counterclockwise about the axis of the support shaft 36 by the spring force of the locking spring 56. At this time, the contacting portion 41 of the canceling plate 40 contacts the striker 70, so that a rotational position of the canceling plate 40 can be determined. In this condition, the projection 34 of the hook 30 and the engagement hole 42 of the canceling plate 40 is positioned so as to have an annular clearance therebetween.
That is, the canceling plate 40 is capable of rotating relative to the hook 30 within a range corresponding to the clearance. As a result, the spring force of the locking spring 56 acts on only the canceling plate 40 and does not act on the hook 30. Therefore, the spring force of the thrust spring 66 can be freely determined independently of the spring force of the locking spring 56 provided that the thrust spring 66 can bias the thrust member 60 to press the hook 30 toward a locking direction against the spring force of the locking spring 56.

Next, an unlocking operation of the locking mechanism 20 will be described.
When the unlocking operation is performed, the cable connecting portion 55 of the release lever 52 is pulled leftward in FIG. 3 via the inner cable C1 of the manipulation cable C shown in FIG. 1. As a result, the release lever 52 rotates counterclockwise in FIG. 3 about the axis of the support shaft 58 against the spring force of the locking spring 56. Therefore, the pawl 46 rotates counterclockwise in FIG. 3 about the axis of the support shaft 50 via the engagement of the engagement hole 54 of the release lever 52 and the engagement protrusion 48 of the pawl 46. At the same time, the engagement protrusion 48 of the pawl 46 interferes with the arm portion 62 of the thrust member 60, so as to rotate the thrust member 60 in the same direction. Therefore, the engagement end surface 47 of the pawl 46 is displaced from the position in which the engagement end surface 47 is capable of engaging the engagement surface 32 of the hook 30. At the same time, the thrust member 60 rotates against the spring force of the thrust spring 66, so that the cam surface 61 thereof is disengaged from the projection 33 of the hook 30. As a result, the hook 30 rotates toward the condition shown in FIG. 2 with the canceling plate 40, so that the engagement between the hook 30 and the striker 70 can be released. Thus, the locking mechanism 20 is changed to the unlocked condition.
Further, when the manipulation force applied to the release lever 52 via the manipulation cable C is canceled, the pawl 46, the thrust member 60 and the release lever 52 are respectively maintained in a rotational position shown in FIG. 2. Further, when the release lever 52 is further rotated counterclockwise from the condition shown in FIG. 2, the engagement protrusion 48 of the pawl 46 moves in the L-shaped engagement hole 54 such that a rotational force of the release lever 52 cannot be transmitted thereto. Therefore, even if the manipulation force is excessively applied to the release lever 52, only the release lever 52 rotates, so that the pawl 46 and the thrust member 60 are maintained in the rotational position shown in FIG. 2.

As previously described, the thrust member 60 is provided with the deformation promoting portion 64 in order to elastically deform the thrust member 60 when the load applied to the thrust member 60 side from the hook 30 side in the locked condition exceeds the predetermined value, and the deformation promoting portion 64 is formed of the through hole 65 formed in the thrust member. Therefore, unlike the deformation promoting portion of Patent Document 1 that is formed by swelling one side of the thrust member into a bead-like shape, a space between the base plates 22 in which the thrust member 60 is disposed, i.e., a thickness of the locking mechanism 20, can be avoided from being increased for the deformation promoting portion 64. Further, with regard to the base plates 22, the pawl 46 or other such members that are positioned adjacent to the thrust member 60, it is not necessary to take measures to prevent the same from interfering with the deformation promoting portion 64 in a thickness direction of the locking mechanism 20.
Further, the through hole 65 forming the deformation promoting portion 64 has the arcuate shape that is centered at the axis of the support shaft 50 corresponding to the rotation center of the thrust member 60. Therefore, regardless of which portion on the cam surface 61 is applied with the load, a uniform force can be applied to the deformation promoting portion 64. As a result, even if the thrusting position of the thrust member 60 against the hook 30 is changed caused by dimension errors of each component of the locking device L or wear because of use, the load that is capable of elastically deforming the deformable portions 64a and 64b of the deformation promoting portion 64 can be maintained constant. Thus, a load absorbing property of the deformation promoting portion 64 can be uniformed.

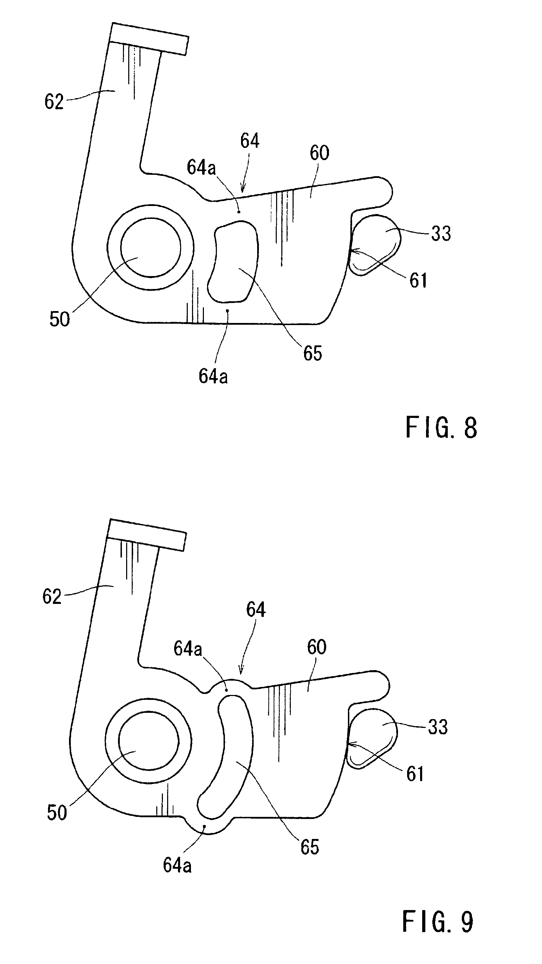

Next, modified forms of the deformation promoting portion 64 formed in the thrust member 60 will be described.
The thrust member 60 according to each of Embodiments 2 to 6 is shown in each of FIG 8 to FIG. 12.
In Embodiment 2 shown in FIG. 8, the through hole 65 that forms the deformation promoting portion 64 of the thrust member 60 is positioned closer to the axis of the support shaft 50 corresponding to the rotation center of the thrust member 60. In this embodiment, the deformation promoting portion 64 includes only two deformable portions 64a that are positioned between both end portions of the through hole 65 and both peripheries of the thrust member 60. When the thrust member 60 is applied with the large load from the hook 30 side, the deformable portions 64a of the deformation promoting portion 64 can be elastically deformed while they are protruded outwardly, thereby absorbing the load.
Further, the through hole 65 has an arcuate shape that is centered at the rotation center of the thrust member 60. Also, the through hole 65 is positioned closer to the rotation center of the thrust member 60. Therefore, even if the thrusting position of the thrust member 60 is changed, the load that is capable of elastically deforming the deformable portions 64a of the deformation promoting portion 64 can be more reliably maintained constant.

In Embodiment 3 shown in FIG. 9, similar to Embodiment 2, the through hole 65 that forms the deformation promoting portion 64 is positioned closer to the rotation center of the thrust member 60. However, each of the two deformable portions 64a of the deformation promoting portion 64 has an arcuate shape that is curved outwardly in an outer periphery thereof. As a result, when the thrust member 60 is applied with the large load, each of the deformable portions 64a can always be bent to a certain shape, so as to be evenly elastically deformed. Thus, the load absorbing property of the deformation promoting portion 64 can be uniformed.

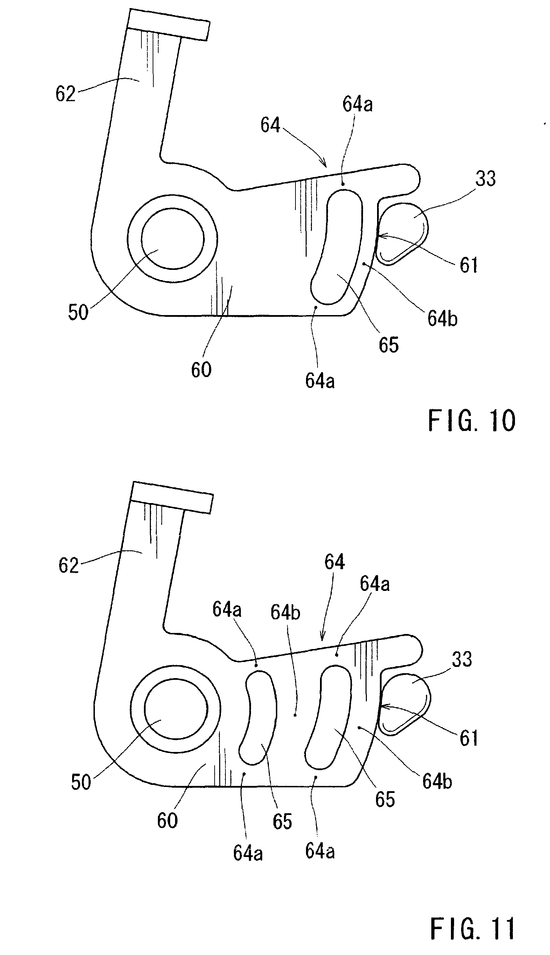

In Embodiment 4 shown in FIG. 10, the through hole 65 that forms the deformation promoting portion 64 is positioned more closer to the cam surface 61 of the thrust member 60 compared to Embodiment 1. In this embodiment, the deformable portion 64b of the deformation promoting portion 64 can be easily elastically deformed than the deformable portions 64a thereof. Therefore, when the cam surface 61 of the thrust member 60 is applied with the load via the projection 33 of the hook 30, the deformable portion 64b can be elastically deformed while it is depressed by the projection 33. Thereafter, depending on the magnitude of the load, the deformable portions 64a can respectively be elastically deformed while they are bent.

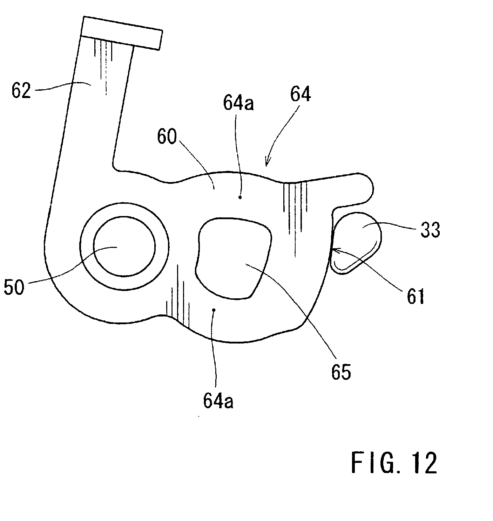

In Embodiment 5 shown in FIG. 11, a pair of through holes 65 are positioned in parallel between the rotation center of the thrust member 60 and the cam surface 61. The through holes 65 form the deformation promoting portion 64. Therefore, the deformation promoting portion 64 includes four deformable portions 64a and two deformable portions 64b.
Further, in Embodiment 6 shown in FIG. 12, the deformation promoting portion 64 is formed of the through hole 65 that can be formed by integrating the two through holes 65 of Embodiment 5 shown in FIG. 11. Further, similar to the deformation promoting portion 64 of Embodiment 3 shown in FIG. 9, each of the two deformable portions 64a has an arcuate shape that is curved outwardly in an outer periphery thereof.

The preferred embodiment for carrying out the present invention have been described with reference to the drawings.
In the present embodiment, the seat cushion 10 of the retractable seat and the floor 14 are exemplified as the two members that respectively have the locking mechanism 20 and the striker 70. However, they can be replaced with any two members that require locking and unlocking by the locking device L. Further, in the locking mechanism 20, the canceling plate 40 can be omitted. In such a locking mechanism 20, the locking spring 56 can be positioned between the release lever 52 and the hook 30.
The thrust member 60 of the locking mechanism 20 is constructed such that the deformation promoting portion 64 can be elastically deformed. However, the thrust member 60 can be constructed such that the deformation promoting portion 64 can be plastically deformed. According to the modified structure, a passenger can know a fact that the load having a predetermined value or more is exerted on the thrust member 60 side.

## Claims

1. A locking device **(L)**, comprising:
a locking mechanism **(20)** provided on one of two members to be engaged with each other; and
a striker **(70)** provided on the other of the two members,
wherein the locking mechanism comprises a base plate **(22)**, a hook (**30**), a pawl **(46)**, a locking spring **(56)**, a thrust member **(60)** and a thrust spring (**66**),
wherein the base plate **(22)** has a recess **(23)** that is capable of receiving the striker **(70)**,
wherein the hook **(30)** is rotatably supported on the base plate **(22)** via a shaft **(36)**, further wherein the hook **(30)**, when rotated, is capable of forming a locked condition in which the striker **(70)** is held between the hook **(30)** and the recess **(23)** of the base plate **(22)** or an unlocked condition in which the hook (**30**) is spaced away from the striker **(70)**,
wherein the pawl **(46)** is rotatably supported on the base plate **(22)** via a shaft **(50)**, further wherein the pawl **(46)** is capable of rotating to a position in which the pawl **(46)** can engage the hook **(30)** and maintaining the hook **(30)** in the locked condition, wherein the locking spring (**56**) is capable of biasing the hook (**30**) and the pawl **(46)** such that the hook and the pawl (**46**) are stabilized in the locked condition or the unlocked condition,
wherein the thrust member **(60)** is rotatably supported on the base plate **(22)** via a shaft **(50)**, further wherein the thrust member **(60)** is capable of rotating to a thrusting position in which the thrust member **(60)** can press the hook **(30)** in the locked condition toward a locking direction via a cam surface **(61)** formed therein,
wherein the thrust spring **(66)** is capable of biasing the thrust member **(60)** toward the thrusting position, and
wherein the thrust member **(60)** has a deformation promoting portion **(64)** that is capable of deforming the thrust member **(60)** to engage the hook **(30)** and the pawl **(46)** with each other when a load having a predetermined value or more is exerted on the thrust member **(60)** side from the hook side **(30)** in the locked condition, **characterized in that**
the deformation promoting portion (**64**) is formed by a through hole **(65)** that is positioned between a rotation center of the thrust member (**60**) and the cam surface (**61**) and has an arcuate shape centered at the rotation center of the thrust member (**60**), and includes at least two deformable portions (**64a**) that are positioned between both end portions of the through hole (65) and both peripheries of the thrust member (**60**).

2. The locking device (**L**) as defined in claim 1, wherein the through hole (**65**) forming the deformation promoting portion (**64**) is positioned closer to the rotation center than the cam surface (**61**) of the thrust member (**60**).

3. The locking device (L) as defined in claim 1 or 2, wherein the deformable portions (**64a**) are curved outwardly from the peripheries of the thrust member (**60**) so as to project therefrom.

4. The locking device (**L**) as defined in any of claims 1 to 3, wherein the deformation promoting portion (**64**) of the thrust member (**60**) is constructed to be deformed within an elastic limit thereof.

## Patentansprüche

1. Verriegelungsvorrichtung (L) mit:
einem Verriegelungsmechanismus (20), der an einem zweier miteinander in Eingriff zu bringender Elemente vorgesehen ist; und
einem Anschlagbolzen (70), der an dem anderen der beiden Elemente vorgesehen ist,
wobei der Verriegelungsmechanismus eine Trägerplatte (22), einen Haken (30), eine Klinke (46), eine Verriegelungsfeder (56), ein Druckelement (60) und eine Vorspannfeder (66) aufweist,
wobei die Trägerplatte (22) eine Aussparung (23) zur Aufnahme des Anschlagbolzens (70) aufweist,
wobei der Haken (30) über eine Welle (36) auf der Trägerplatte (22) drehbeweglich gelagert ist und des Weiteren bei Verdrehung einen Verriegelungszustand, in dem der Anschlagbolzen (70) zwischen dem Haken (30) und der Aussparung (23) der Trägerplatte (22) gehalten wird, oder einen Entriegelungszustand, in dem Haken (30) vom Anschlagbolzen (70) beabstandet ist, bilden kann,
wobei die Klinke (46) über eine Welle (50) auf der Trägerplatte (22) drehbeweglich gelagert ist und des Weiteren in eine Position drehbar ist, in der sie mit dem Haken (30) in Eingriff gebracht werden kann, und den Haken (30) im Verriegelungszustand halten kann,
wobei die Verriegelungsfeder (56) den Haken (30) und die Klinke (46) in der Weise vorspannen kann, dass der Haken und die Klinke (46) im Verriegelungszustand oder Entriegelungszustand gehalten werden,
wobei das Druckelement (60) über eine Welle (50) auf der Trägerplatte (22) drehbeweglich gelagert ist und des Weiteren in eine Druckposition drehbar ist, in der es über eine am Druckelement (60) ausgebildete Nockenfläche (61) den Haken (30) in Verriegelungsrichtung in den Verriegelungszustand drücken kann,
wobei die Vorspannfeder (66) das Druckelement (60) in Richtung der Druckposition vorspannen kann, und
wobei das Druckelement (60) einen Verformungsförderungsabschnitt (64) hat, der in der Lage ist, das Druckelement (60), das den Haken (30) und die Klinke (46) miteinander in Eingriff bringt, zu verformen, wenn im Verriegelungszustand von der Seite des Hakens (30) aus eine Last vorgegebener Größe oder größer auf die Seite des Druckelements (60) ausgeübt wird, **dadurch gekennzeichnet, dass**
der Verformungsförderungsabschnitt (64) durch ein Durchgangsloch (65) gebildet ist, das zwischen der Drehmitte des Druckelements (60) und der Nockenfläche (61) positioniert ist und eine um das Drehzentrum des Druckelements (60) herum zentrierte Bogenform aufweist, und wenigstens zwei verformbare Abschnitte (64a) aufweist, die zwischen den beiden Endabschnitten des Durchgangslochs (65) und den beiden Rändern des Druckelements (60) liegen.

2. Verriegelungsvorrichtung (L) nach Anspruch 1, wobei das den Verformungsförderungsabschnitt (64) ausbildende Durchgangsloch (65) näher zur Drehmitte liegt als die Nockenfläche (61) des Druckelements (60).

3. Verriegelungsvorrichtung (L) nach Anspruch 1 oder 2, wobei die verformbaren Abschnitte (64a) von den Rändern des Druckelements (60) aus vorspringend nach außen gekrümmt sind.

4. Verriegelungsvorrichtung (L) nach einem der Ansprüche 1 bis 3, wobei der Verformungsförderungsabschnitt (64) des Druckelements (60) innerhalb seiner Elastizitätsgrenze verformbar ausgelegt ist.

## Revendications

1. Dispositif de blocage (L) comprenant :
un mécanisme de blocage (20) prévu sur l'un des deux éléments destinés à se mettre en prise entre eux ; et
un percuteur (70) prévu sur l'autre des deux éléments,
dans lequel le mécanisme de blocage comprend une plaque de base (22), un crochet (30), un cliquet (46), un ressort de blocage (56), un élément de poussée (60) et un ressort de poussée (66),
dans lequel la plaque de base (22) a un évidement (23) qui peut recevoir le percuteur (70),
dans lequel le crochet (30) est supporté de manière rotative sur la plaque de base (22) via un arbre (36), dans lequel, en outre, le crochet (30), lorsqu'il tourne, peut former une condition bloquée dans laquelle le percuteur (70) est maintenu entre le crochet (30) et l'évidement (23) de la plaque de base (22) ou une condition débloquée dans laquelle le crochet (30) est éloigné du percuteur (70),
dans lequel le cliquet (46) est supporté de manière rotative sur la plaque de base (22) via un arbre (50), dans lequel, en outre, le cliquet (46) peut tourner jusqu'à une position dans laquelle le cliquet (46) peut mettre en prise le crochet (30) et maintenir le crochet (30) dans la condition bloquée,
dans lequel le ressort de blocage (56) peut solliciter le crochet (30) et le cliquet (46) de sorte que le crochet et le cliquet (46) sont stabilisés dans la condition bloquée ou dans la condition débloquée,
dans lequel l'élément de poussée (60) est supporté de manière rotative sur la plaque de base (22) via un arbre (50), dans lequel, en outre, l'élément de poussée (60) peut tourner jusqu'à une position de poussée dans laquelle l'élément de poussée (60) peut comprimer le crochet (30) dans la condition bloquée vers une direction de blocage via une surface de came (61) formée dans celui-ci,
dans lequel le ressort de poussée (66) peut solliciter l'élément de poussée (60) vers la position de poussée, et
dans lequel l'élément de poussée (60) a une partie favorisant la déformation (64) qui peut déformer l'élément de poussée (60) pour mettre en prise le crochet (30) et le cliquet (46) l'un par rapport à l'autre lorsqu'une charge ayant une valeur prédéterminée ou plus est exercée sur le côté de l'élément de poussée (60) à partir du côté du crochet (30) dans la condition bloquée, **caractérisé en ce que** :
la partie favorisant la déformation (64) est formée par un trou de passage (65) qui est positionné entre un centre de rotation de l'élément de poussée (60) et la surface de came (61) et a une forme arquée centrée au niveau du centre de rotation de l'élément de poussée (60) et comprend au moins deux parties déformables (64a) qui sont positionnées entre les deux parties du trou de passage (65) et les deux périphéries de l'élément de poussée (60).

2. Dispositif de blocage (L) selon la revendication 1, dans lequel le trou de passage (65) formant la partie favorisant la déformation (64) est positionné plus à proximité du centre de rotation que la surface de came (61) de l'élément de poussée (60).

3. Dispositif de blocage (L) selon la revendication 1 ou 2, dans lequel les parties déformables (64a) sont incurvées vers l'extérieur à partir des périphéries de l'élément de poussée (60) afin de faire saillie à partir de celui-ci.

4. Dispositif de blocage (L) selon l'une quelconque des revendications 1 à 3, dans lequel la partie favorisant la déformation (64) de l'élément de poussée (60) est construite afin d'être déformée dans sa limite d'élasticité.
